(19) Europäisches Patentamt
European Patent Office
Office européen des brevets

(11) **EP 3 291 440 A1**

(12) **EUROPÄISCHE PATENTANMELDUNG**

(43) Veröffentlichungstag:
**07.03.2018  Patentblatt 2018/10**

(51) Int Cl.:
**H02P 29/50** $^{(2016.01)}$    **H02M 1/00** $^{(2006.01)}$

(21) Anmeldenummer: **16186566.2**

(22) Anmeldetag: **31.08.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Kartashov, Oleksandr**
  **90429 Nürnberg (DE)**
• **Köllensperger, Peter**
  **90425 Nürnberg (DE)**
• **Tischmacher, Hans**
  **91207 Lauf (DE)**
• **Tsoumas, Ioannis**
  **8032 Zürich (CH)**

(54) **UMRICHTER-MOTOR-SYSTEM MIT MINIMALEN MODULATIONSVERLUSTEN**

(57)    Bei einem Umrichter-Motor-System sollen die Modulationsverluste minimiert werden. Dazu werden ein System und ein Verfahren zum Ermitteln einer Betriebsfrequenz des Umrichter-Motor-Systems, das einen Umrichter (U) und einen damit angesteuerten Motor (M) aufweist, vorgeschlagen. Es erfolgt ein Ermitteln eines harmonischen Verlustfaktors einer Spannungsoberschwingung des Motors (M) in Abhängigkeit von einer Frequenz sowie ein Ermitteln eines Schaltverlustfaktors des Umrichters (U) in Abhängigkeit von der Pulsfrequenz beispielsweise durch ein Berechnungsmodul (BM) einer Steuervorrichtung (SV). Anschließend werden die Oberschwingungsverluste aus dem o.g. harmonischen Verlustfaktor und den theoretischen Amplituden der Spannungsoberschwingungen für ein bestimmtes Modulationsverfahren/Pulsmuster über der Pulsfrequenz berechnet. Darüber hinaus werden die Schaltverluste aus dem Schaltverlustfaktor über der Pulsfrequenz berechnet. Schließlich wird die Betriebspulsfrequenz bei einem Minimum der Modulationsverluste beispielsweise durch eine Auswahleinheit (AE) bestimmt, wobei die Modulationsverluste die Summe des Oberschwingungsverluste und der Schaltverluste darstellen.

FIG 2

EP 3 291 440 A1

**Beschreibung**

Die vorliegende Erfindung betrifft ein Verfahren zum Ermitteln einer Betriebspulsfrequenz eines Umrichter-Motor-Systems, das einen Umrichter und einen damit angesteuerten Motor aufweist, für minimale Modulationsverluste. Darüber hinaus betrifft die vorliegende Erfindung ein entsprechendes Umrichter-Motor-System mit einem Umrichter und einem von dem Umrichter angesteuerten Motor.

Beim Betrieb eines Elektromotors an einem Frequenzumrichter (nachfolgend kurz Umrichter genannt) entstehen Motorverluste, die von den Oberschwingungen der nicht-sinusförmigen Ausgangsspannung des Umrichters hervorgerufen werden. Die Verluste durch Oberschwingungen im Motor sowie die Schaltverluste des Umrichters können durch das angewandte Modulationsverfahren bzw. Pulsmuster entscheidend beeinflusst werden. Aus diesem Grund wird anschließend für die Oberschwingungs- und Schaltverluste der Begriff "Modulationsverluste" verwendet.

Im Folgenden werden die Grundbegriffe erläutert: Harmonischer Verlustfaktor ("harmonic loss factor" in der Literatur): $k\_h(f) = P\_v1(f)/U^2(f)$,
wobei $P\_v1(f)$ die Verlustleistung bedeutet, die von einer sinusförmigen Spannung mit einer Amplitude U und einer Frequenz f verursacht wird.

Oberschwingungsverluste: $P\_vh(A,fp)$, wobei A der Aussteuergrad und fp die Pulsfrequenz ist. Für die OPMs sind die Oberschwingungsverluste eine Funktion des Aussteuergrades und der Ausgangfrequenz, da Letztere auch die Pulsfrequenz bestimmt. Die Oberschwingungsverluste sind die Verluste, die von der Summe der Spannungsoberschwingungen verursacht werden, und sie sind u.a. auch eine Funktion des Aussteuergrades. Sie können für ein bestimmtes Modulationsverfahren/Pulsmuster, Aussteuergrad und Pulsfrequenz entweder vom harmonischen Verlustfaktor und von den theoretischen Amplituden der Oberschwingungen berechnet werden oder direkt gemessen werden.

Schaltverlustfaktor: $k\_sw(fp) = P\_v2(fp)\pi/I$, dabei ist $P\_v2(fp)$ die gemessene Verlustleistung, fp die Pulsfrequenz und I die Amplitude der Grundschwingung des Ausgangsstroms. Ggf. ist diese Amplitude eine fiktive Amplitude, die zusätzliche Verluste wegen z.B. kapazitiver Umladeströme berücksichtigt. Für die Messung dieses Faktors müssen die Schaltereignisse möglichst gleichmäßig verteilt sein (wie bei kontinuierliche Modulationsverfahren, z.B. Raumzeigermodulation). Dieser Faktor ist proportional zu der Schaltenergie der Halbleiter und soll linear mit der Pulsfrequenz steigen.

Schaltverluste: $P\_v\_sch(I, fp)$. Sie können aus dem Schaltverlustfaktor und der Eigenschaften des Referenzsignals für on-line Modulationsverfahren (kontinuierliche oder diskontinuierliche) oder aus dem Schaltverlustfaktor und dem Schaltwinkel eines Pulsmusters für OPM berechnet werden. Für OPM oder diskontinuierliche Modulationsverfahren sind diese Verluste auch eine

Funktion des $\cos\varphi$. Letzteres hängt vom Motortyp (z.B. Asynchron-, Synchron-, Synchron-Reluktanzmotor) und von der Motorlast ab.

Ein Referenz-Antriebssystem mit einem Umrichter und einem Motor besitzt gemäß europäischer Norm 505998-2 eine Mehrzahl an Verlustursachen. Diese Ursachen werden entweder dem Motor oder dem Umrichter zugeschrieben. Die oben genannten Modulationsverluste werden zum Teil dem Motor und zum Teil dem Umrichter angerechnet. Das erwähnte Referenz-Antriebssystem mit einer Leistung von 400 kW besitzt Modulationsverluste, die etwa 20% der Gesamtverluste betragen. Davon ist wiederum etwa ein Viertel dem Umrichter und drei Viertel dem Motor zuzuschreiben. Dies bedeutet, dass der größte Teil dieser Modulationsverluste von den Oberschwingungsverlusten des Motors herrühren.

Zur Verminderung der Oberschwingungsverluste können optimierte Modulationsverfahren eingesetzt werden. Die systembedingten Modulationsverluste und dadurch auch die Gesamtsystemverluste sind von dem Modulationsverfahren/Pulsmuster sowie auch von der Pulsfrequenz, d.h. der Anzahl der Schaltzyklen der Umrichterhalbleiter pro Zeiteinheit, abhängig.

Um das geeignete Modulationsverfahren/Pulsmuster bzw. die geeignete Pulsfrequenz zur Minimierung der Systemverluste auszuwählen, müssen Systemparameter wie Schaltenergie der Halbleiter sowie harmonischer Leistungsfaktor des Motors bekannt sein. Diese Systemeigenschaften sind jedoch häufig unbekannt und variieren stark zwischen verschiedenen Umrichtern bzw. Elektromotoren. Dies führt in der Regel zu einer nicht optimalen Auswahl des Modulationsverfahrens/Pulsmusters bzw. der Pulsfrequenz.

Die Aufgabe der vorliegenden Erfindung besteht somit darin, ein Verfahren zum Betreiben eines Umrichter-Motor-Systems vorzuschlagen, bei dem minimale Modulationsverluste realisiert werden können. Darüber hinaus soll ein entsprechendes Umrichter-Motor-System angegeben werden.

Erfindungsgemäß wird diese Aufgabe durch ein Verfahren nach Anspruch 1 sowie ein Umrichter-Motor-System nach Anspruch 10 gelöst. Vorteilhafte Weiterbildungen der Erfindung ergeben sich aus den Unteransprüchen.

Entsprechend der Erfindung wird demnach ein Verfahren zum Ermitteln einer Betriebspulsfrequenz eines Umrichter-Motor-Systems, das einen Umrichter und einen damit angesteuerten Motor aufweist, für minimale Modulationsverluste vorgeschlagen, wobei ein harmonischer Verlustfaktor des Motors in Abhängigkeit von einer Frequenz (Ausgangsfrequenz des Umrichters) und ein Schaltverlustfaktor des Umrichters in Abhängigkeit von der Pulsfrequenz ermittelt werden. Es werden also etwaige Verlustfaktoren getrennt für Motor und Umrichter ermittelt. Dem jeweiligen Ermitteln liegen beispielsweise eine oder mehrere entsprechende Messungen zugrunde. Sobald beide Verlustfaktoren bekannt sind, kann daraus eine Pulsfrequenz bestimmt werden, bei der die Modulationsverluste minimiert werden.

Für OPM (optimierte Pulsmuster) oder diskontinuierliche Modulationsverfahren muss auch das cos φ, d.h. der Phasenwinkel zwischen Strom und Spannung, bekannt sein.

Die Bestimmung eines Minimums der Modulationsverluste beruht auf der Erkenntnis, dass die Oberschwingungsverluste mit zunehmender Frequenz immer weniger abnehmen und die Schaltverluste des Umrichters über der Frequenz im Wesentlichen linear steigen. Diese Pulsfrequenz, bei der sich das Minimum befindet, wird im Folgenden als Betriebspulsfrequenz bezeichnet. Das Umrichter-Motor-System wird nämlich günstigerweise bei dieser bestimmten Betriebspulsfrequenz betrieben.

Vorzugsweise erfolgen das Ermitteln des harmonischen Verlustfaktors und das Ermitteln des Schaltverlustfaktors durch Messungen, bei denen der Umrichter zur Anregung dient. Dies bedeutet, dass der Umrichter nicht nur die Funktion des Antreibens des Motors, sondern auch die Funktion eines Teils eines Messgeräts besitzt, das für Messungen die jeweilige elektrische Anregung zur Verfügung stellt.

Bei einer weiteren bevorzugten Ausführungsform werden aus dem harmonischen Verlustfaktors in Abhängigkeit von der Pulsfrequenz und von einer Amplitude der Spannungsgrundschwingung unter Berücksichtigung eines vorgegebenen Optimierungskriteriums mehrere Pulsmuster zum Betreiben des Umrichter-Motor-Systems ermittelt. Auf diese Weise können in einem U-f-Raum (Spannungs-Frequenz-Raum) zahlreiche Pulsmuster bereitgestellt werden, welche in Abhängigkeit von aktuellen U-f-Werten abgerufen werden können.

Vorteilhafterweise wird zum Betreiben des Umrichter-Motor-Systems durch den Umrichter automatisch dasjenige der mehreren Pulsmuster ausgewählt, das der bestimmten Betriebspulsfrequenz und der erwünschten Amplitude der Spannungsgrundschwingung. Es erfolgt also automatisch die Auswahl des in der aktuellen Situation günstigsten Pulsmusters, so dass das Umrichter-Motor-System stets insoweit optimal betrieben werden kann.

Jedes der mehreren Pulsmuster kann eine viertelperiodische Symmetrie besitzen. Dies bedeutet, dass jedes Pulsmuster durch Mehrfachspiegelung einer viertelten Periode erzeugt werden kann. Dies aber bedeutet, dass für ein einziges Pulsmuster wesentlich weniger Schaltwinkel gespeichert werden müssen, denn ein vollständiges Pulsmuster kann immer aus einem Viertel einer Periode generiert werden. Dementsprechend lässt sich die Datenverarbeitungszeit reduzieren.

Entsprechend einer weiteren Ausgestaltung kann das Ermitteln des harmonischen Verlustfaktors im Leerlauf des Motors stattfinden. Dies hat den Vorteil, dass der harmonische Verlustfaktors bereits vorab bei der Montage ermittelt werden kann. Möglich ist dies, da der harmonischen Verlustfaktors nur unwesentlich von der Last abhängt. Hingegen hängen die Schaltverluste des Umrichters deutlich vom Schaltstrom und cos φ und damit von der Last ab.

In einer Weiterentwicklung kann das Ermitteln der Schaltverluste durch Berechnen aus Schaltwinkeln eines der Pulsmuster erfolgen. Damit können sie sehr rasch und einfach ermittelt werden, was letztlich auch die Bestimmung des Minimums der Modulationsverluste und damit die Bestimmung der entsprechenden Betriebspulsfrequenz beschleunigt.

Das oben geschilderte Verfahren mit seinen Variationsmöglichkeiten kann dazu genutzt werden, ein Verfahren zum Betreiben eines Umrichter-Motor-Systems auch hinsichtlich der gesamten Systemverluste zu optimieren bzw. zu verbessern. Dabei erfolgt zunächst ein Ermitteln einer Betriebsfrequenz des Umrichter-Motor-Systems, wie es oben beschrieben wurde. Zusätzlich erfolgt ein Anpassen der Betriebspulsfrequenz in Abhängigkeit von einem Drehmoment oder von einer Drehzahl des Motors derart, dass ein Systemverlust des Umrichter-Motor-Systems reduziert wird. Die Betriebspulsfrequenz kann also in Abhängigkeit von dem geforderten Drehmoment bzw. der geforderten Drehzahl im Hinblick auf die Verluste des gesamten Systems verändert werden. Neben den reinen Modulationsverlusten können dabei auch andere Verluste des Motors und des Umrichters berücksichtigt werden. Schließlich wird das Umrichter-Motor-System mit der angepassten Betriebspulsfrequenz betrieben.

Die oben formulierte Aufgabe wird erfindungsgemäß auch gelöst durch ein Umrichter-Motor-System mit

- einem Umrichter und
- einem von dem Umrichter angesteuerten Motor sowie
- einer Steuervorrichtung zum Steuern des Umrichters, die ausgebildet ist zum
- Ermitteln eines harmonischen Verlustfaktors des Motors in Abhängigkeit von einer Frequenz (Ausgangsfrequenz des Umrichters),
- Ermitteln von Oberschwingungsverlusten aufgrund von Oberschwingungen aus dem harmonischen Verlustfaktor und aus für ein vorbestimmtes Modulationsverfahren, einen vorbestimmten Ansteuergrad und mehreren Pulsfrequenzen vorgegebene Amplituden der Oberschwingungen,
- Ermitteln eines Schaltverlustfaktors des Umrichters in Abhängigkeit von der Pulsfrequenz,
- Ermitteln von Schaltverlusten aus dem Schaltverlustfaktor, aus Schaltwinkeln des Umrichters und aus einem Motorstrom,
- Bestimmen der Betriebspulsfrequenz bei einem Minimum der Modulationsverluste, die die Summe der Oberschwingungsverluste und der Schaltverluste darstellen, über der Pulsfrequenz und
- Steuern des Umrichters mit der bestimmten Betriebspulsfrequenz.

Optional kann die Steuervorrichtung auch ausgelegt sein zum Bestimmen von Aussteuergradgrenzen (Ausgangsspannungen des Umrichters) sowie Ausgangsfrequenzgrenzen (Ausgangsfrequenzen des Umrichters) für das Umschalten zwischen verschiedenen Modulationsverfahren,

- Bestimmen einer U-f-Tabelle für die Steuerung des Umrichters aus den Ansteuergradgrenzen und den Ausgangsfrequenzgrenzen und
- Steuern des Umrichters (UR) mit der bestimmten U-f-Tabelle anstelle der bestimmten (einen) Betriebspulsfrequenz.

Vorzugsweise ist die Steuervorrichtung dafür ausgelegt, den Umrichter zu dem Ermitteln des harmonischen Verlustfaktors zu nutzen, indem der Umrichter den Motor dafür anregt. Ist dann darüber hinaus die Steuervorrichtung in den Umrichter integriert, so kann der Umrichter selbst die Systemeigenschaften messen und die optimale Betriebspulsfrequenz bzw. das optimale Modulationsverfahren/Pulsmuster bestimmen.

Die oben im Zusammenhang mit dem erfindungsgemäßen Verfahren geschilderten Variationsmöglichkeiten und Vorteile lassen sich sinngemäß auch auf das erfindungsgemäße Umrichter-Motor-System mit den entsprechenden Mitteln übertragen. Insbesondere stellen etwaige Verfahrensmerkmale im Zusammenhang mit dem Umrichter-Motor-System entsprechende funktionale Merkmale dar.

Die vorliegende Erfindung wird nun anhand der beigefügten Zeichnungen näher erläutert, in denen zeigen:

FIG 1　ein Beispiel der relativen Verluste eines Antriebssystems über der Pulsfrequenz;

FIG 2　ein schematisches Blockschaltdiagramm eines Motorreglers mit Anpassung der Pulsfrequenz zur Minimierung der Modulationsverluste und

FIG 3　eine quadratische Lastkennlinie sowie Fluss- und Pulsfrequenz-Kennlinien zur Reduzierung der Systemverluste abhängig von der Drehzahl.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Merkmalskombinationen realisiert werden können.

Wie eingangs erwähnt wurde, sollen die Modulationsverluste eines Umrichter-Motor-Systems so weit wie möglich minimiert werden. Darüber hinaus können auch andere Systemverluste des Umrichter-Motor-Systems reduziert werden. Das Umrichter-Motor-System besitzt nämlich zahlreiche Verlustquellen, die einerseits dem Motor und andererseits dem Umrichter zugeschrieben werden können. Die Modulationsverluste stammen größtenteils vom Motor und gehen auf die Motor-Oberschwingungen zurück. Die Modulationsverluste aus dem Umrichter ergeben sich aus den Umrichter-Schaltverlusten.

Neben den Modulationsverlusten, die etwa 20% bei dem eingangs erwähnten Referenz-Antriebssystem mit einer Leistung von 400 kW betragen, spielen vor allem auch Motor-Grundschwingungen eine massive Rolle, denn die durch sie hervorgerufenen Verluste liegen bei dem Referenz-Antriebssystem bei über 40%.

Seitens des Umrichters ergeben sich neben den Schaltverlusten auch Kühlungsverluste und Leitungsverluste. Zu Letzterem gehören insbesondere Wechselrichter-Leitungsverluste, Zwischenkreis-Verluste, Drossel-Verluste, Stromschienen-Verluste und Gleichrichter-Verluste.

Im Folgenden stehen jedoch die Modulationsverluste bezüglich der Motor-Oberschwingungen und der Wechselrichter-Schaltverluste im Vordergrund.

Das oben genannte Problem der suboptimalen Auswahl der Betriebspulsfrequenz bzw. des Modulationsverfahrens oder Pulsmusters kann z.B. gelöst werden, wenn der Frequenzumrichter für die Messung der Systemeigenschaften verwendet wird und anschließend der Umrichter selbst die optimale Pulsfrequenz bzw. das optimale Modulationsverfahren/Pulsmuster auswählt.

Ein wichtiger Systemparameter des Umrichter-Motor-Systems, der beispielsweise durch den Umrichter selbst bestimmt werden muss, ist der harmonische Verlustfaktor k_h(f), der sich aus folgender Formel ergibt:

$$k\_h(f) = P\_v(f)/U^2(f),$$

wobei P_v(f) die Verlustleistung bedeutet, die von einer sinusförmigen Spannung mit einer Amplitude U und mit einer Frequenz f verursacht wird. Durch die Einspeisung des Motors mit Spannungsharmonischen und die Messung der Verlustleistung für diese Harmonischen kann der harmonische Verlustfaktor gemessen werden.

Ein einfaches und schnelles Verfahren, für die Einspeisung von Spannungsharmonischen ist, optimierte Pulsmuster zu verwenden. Solche Pulsmuster können vorab für unterschiedliche Spannungen und unterschiedliche Frequenz, d.h. in einem U-f-Raum, bestimmt werden.

Die Spannungsoberschwingungen eines dreiphasigen optimierten Pulsmusters, das eine 120°-Symmetrie zwischen den drei Phasen sowie halbperiodische oder viertelperiodische Symmetrie für jede Phase besitzt (d.h. jede Halbperiode/Viertelperiode eines Pulsmusters ist zu den anderen Halbperioden/Viertelperioden symmetrisch), haben Frequenzen gleich der 5-, 7-, 11-, 13-, 17-, 19-, usw. -fachen der Grundfrequenz (alle Vielfachen, die nicht durch drei oder zwei teilbar sind). Die Letztere braucht die halbe Anzahl von Schaltwinkeln im Vergleich zu der Ersteren und somit reduziert den Speicherplatz sowie den Datenverarbeitungsaufwand deutlich.

Da die Messungen günstigerweise vom Umrichter selbst durchgeführt werden, ist es möglich, dass während eines Hochlaufs des Motors, bei dem sich die Grundfrequenz zum Beispiel von 0 bis 100 Hz ändert, gleichzeitig mit Hilfe der theoretisch berechneten Spannungsoberschwingungen und der gemessenen zugehörigen Stromoberschwingungen die elektrische Leistung für verschiedene Frequenzen zu berechnen. Die Spannungsoberschwingungen können auch gemessen werden, wenn es eine Spannungsmessung am Umrichterausgang gibt. Die Frequenz der Oberschwingungen ändert sich automatisch mit der Drehzahl, weil sie immer ein Vielfaches der Grundfrequenz ist. Die Messung kann auch im Leerlauf stattfinden, da die Oberschwingungsverluste keine größere Abhängigkeit von der Last aufweisen. In diesem Fall ist die Verlustleistung des Motors gleich der elektrischen Leistung am Motorklemmenkasten.

Wenn der harmonische Verlustfaktor, d.h. die entsprechende Funktion über der Frequenz, bekannt ist, können die Oberschwingungsverluste des Motors für verschiedene Pulsfrequenzen bzw. Modulationsverfahren/Pulsmuster berechnet werden. Die Schaltverluste des Umrichters können auch aus den Schaltwinkeln der Pulsmuster berechnet werden, wenn die Schaltenergie der Halbleiter (Transistoren/Dioden) bekannt sind.

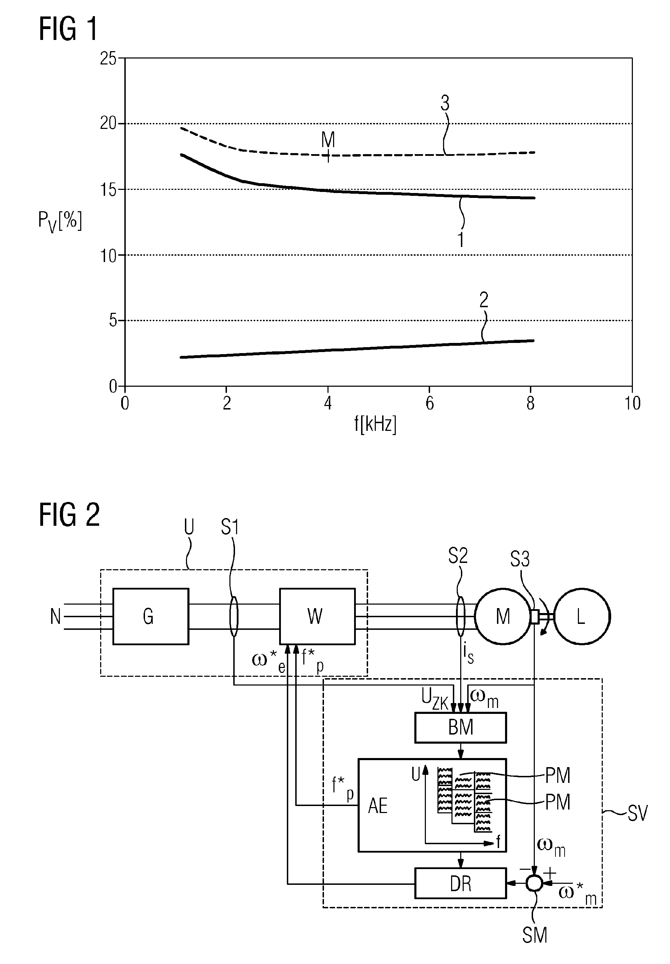

FIG 1 gibt ein Beispiel der relativen Modulationsverluste $P_V$ eines Antriebssystems über der Pulsfrequenz f wieder. Die relativen Oberschwingungsverluste 1 sind verhältnismäßig konstant. Sie steigen bei niedrigen Frequenzen (hier unter 2 kHz) etwas an. Im Wesentlichen liegen die Oberschwingungsverluste 1 im vorliegenden Beispiel etwa bei 15 Prozent. Demgegenüber sind die Schaltverluste 2 deutlich geringer und steigen hier zwischen 1 kHz bis 8 kHz von etwa 2 auf 4% linear an. Die Summe der Oberschwingungsverluste 1 des Motors und der Schaltverluste 2 des Umrichters ergibt die Modulationsverluste 3.

Da die Oberschwingungsverluste 1 bei kleinen Frequenzen mit steigender Frequenz stärker fallen als die Schaltverluste 2 über den gesamten Bereich steigen, ergibt sich in dem Summensignal der Modulationsverluste 3 ein Minimum MM etwa bei 4 kHz. Dieses Minimum MM liegt in Abhängigkeit vom jeweiligen System gegebenenfalls auch bei anderen Pulsfrequenzen. Bei dem Minimum MM ergibt sich also diejenige Betriebspulsfrequenz (kurz Pulsfrequenz), bei der die Modulationsverluste 3 minimal sind.

Da die Schaltverluste des Umrichters abhängig vom Ausgangsstrom sowie ggf. vom cosφ sind, sollte die Auswahl der Pulsfrequenz bzw. des Modulationsverfahrens/Pulsmusters zusätzlich auch abhängig von der Motorlast stattfinden. Dazu wird zunächst anhand von FIG 2 einem Umrichter-Motor-System mit Last und entsprechender Regelung beschrieben.

Ein Umrichter UR wird zum Beispiel von einem dreiphasigen Netz N gespeist und liefert dreiphasige Spannung an einen Motor M, der eine Last L antreibt. Der Umrichter UR besitzt beispielsweise einen Gleichrichter G, der die Dreiphasen-Spannung des Netzes N in eine Gleichspannung wandelt. Dieser Gleichspannung wird von einem Wechselrichter W wieder in eine Wechselspannung gewandelt, zum Beispiel eine Drei-Phasen-Wechselspannung.

Ein erster Sensor S1 liefert eine Zwischenkreisspannung $u_{ZK}$ aus dem Zwischenkreis zwischen dem Gleichrichter G und dem Wechselrichter W des Umrichters UR an eine Steuervorrichtung SV und insbesondere an ein Berechnungsmodul BM der Steuervorrichtung SV.

Ein zweiter Sensor S2 liefert einen Stromwert $i_s$ für den Ausgangsstrom des Umrichters UR, also den Motorstrom, an das Berechnungsmodul BM der Steuervorrichtung SV.

Ein dritter Sensor S3, der am Motor M angeordnet ist, liefert eine Motordrehzahl $\omega_m$ ebenfalls an das Berechnungsmodul BM, aber auch an einen Summierer SM.

Das Berechnungsmodul BM kann die Modulationsverluste aus der Zwischenkreisspannung $u_{ZK}$, dem Stromwert $i_S$ und der Motordrehzahl $\omega_m$ berechnen.

Speziell berechnet das Berechnungsmodul BM das Minimum MM der Modulationsverluste und liefert eine Vorgabe für die optimale Pulsfrequenz an eine Auswahleinheit AE. Anhand dieser Vorgabe sowie einer aktuellen Ausgangsspannung und Ausgansfrequenz wählt die Auswahleinheit AE ein Pulsmuster PM in dem U-f-Raum aus. Sie liefert einen entsprechenden Sollwert $f^*_p$, der Pulsfrequenz an den Wechselrichter W.

Ein Drehzahlregler DR der Steuervorrichtung SV erhält von der Auswahleinheit AE einen entsprechenden Steuerwert. Außerdem erhält der Drehzahlregler DR von dem Summierer SM die Differenz aus einem Sollwert $\omega^*_m$ der Motordrehzahl und der Motordrehzahl $\omega_m$. Der Drehzahlregler DR liefert einen entsprechenden Drehzahlwert $\omega^*_e$ an den Wechselrichter W.

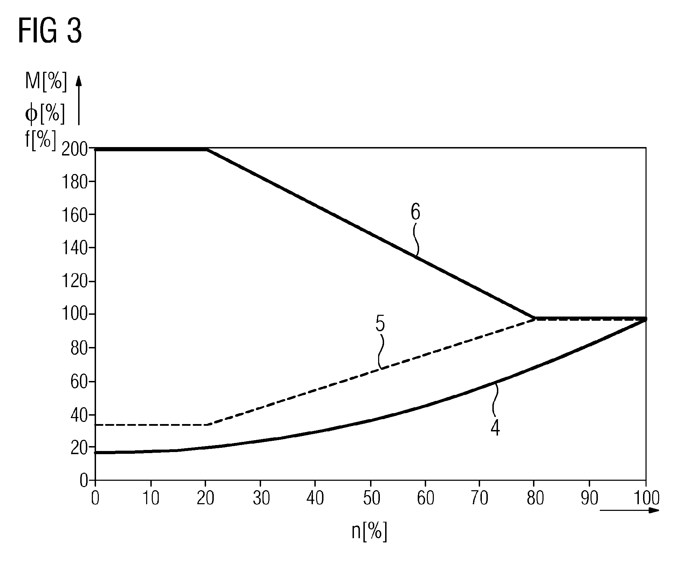

Anhand von FIG 3 wird nun eine weitere Optimierung erläutert, die zur Reduzierung der gesamten Systemverluste beitragen soll. Das System besitzt eine zum Beispiel quadratische Lastkennlinie 4 über der relativen Drehzahl n. Zur Optimierung der Systemverluste kann beispielsweise ab 80% der Drehzahl abwärts der Flusssollwert und damit der Motorstrom linear beispielsweise bis zu einer Drehzahlgrenze von n=20% reduziert werden. Entsprechend kann in dem Drehzahlbereich von 80% bis 20% abwärts die Pulsfrequenz 6 beispielsweise linear bis zu dem Drehzahlgrenzwert von 20% erhöht werden. Bei einer weiteren Erhöhung der Pulsfrequenz 6 unter die Drehzahlgrenze von 20% würden die Systemverluste wieder ansteigen. Daher wird die Pulsfrequenz 6 und der Flusssollwert 5 unterhalb der Drehzahlgrenze nicht mehr verändert.

Eine derartige quadratische Momenten- bzw. Lastkennlinie 4 ist beispielsweise für Pumpen- und Lüftersysteme typisch. Wenn also dort der Motorfluss 5 mit sinkender Drehzahl reduziert wird, werden die Systemverluste, die von der Grundschwingung abhängig sind, ebenfalls reduziert bzw. minimiert. Die Lastkennlinie 4 ist dem Umrichter bekannt, so dass abhängig von der Motordrehzahl n der Motorstrom $i_s$ berechnet werden kann.

Auf der Basis des berechneten harmonischen Verlustfaktors k_h(f) und der Schaltenergie der Wechselrichterhalbleiter werden die Modulationsverluste 3 des Systems berechnet und die optimale Pulsfrequenz $f_{opt}$ beim dortigen Minimum ausgewählt. Für kleinere Drehzahlen steigt die optimale Pulsfrequenz. Der Motorstrom $i_S$ ist für Teillastbetrieb häufig niedrig genug, so dass die Reduzierung der Motoroberschwingungsverluste 1 (vergleiche FIG 1) durch die erhöhte Pulsfrequenz f eine größere Gewichtung als die gleichzeitige Erhöhung der Wechselrichterschaltverluste (2) in den Gesamtverlusten hat.

In vorteilhafter Weise kann somit ein Verfahren bzw. ein System bereitgestellt werden, bei dem der Umrichter zur Anregung für die Messung der harmonischen Verlustfaktoren des Motors verwendet wird. Dadurch kann die Messung der harmonischen Verlustfaktoren kontinuierlich und sehr schnell (einige Minuten) durchgeführt werden. Ferner kann die gemessene Charakteristik des Motors im Zusammenhang mit den Eigenschaften der Halbleiter des Umrichters berücksichtigt werden, um die optimale Pulsfrequenz bzw. das optimale Pulsmuster zu verwenden, so dass die Modulationsverluste des Systems minimiert werden. Optional kann auch eine Anpassung der Pulsfrequenz in Abhängigkeit von dem berechneten Drehmoment des Motors oder der Drehzahl stattfinden. Im letzteren Fall muss die Lastkennlinie M=f(n) bekannt sein.

**Patentansprüche**

1. Verfahren zum Ermitteln einer Betriebspulsfrequenz eines Umrichter-Motor-Systems, das einen Umrichter (UR) und einen damit angesteuerten Motor (M) aufweist, für minimale Modulationsverluste, **gekennzeichnet durch**

    - Ermitteln eines harmonischen Verlustfaktors des Motors in Abhängigkeit von einer Frequenz,
    - Ermitteln von Oberschwingungsverlusten aufgrund von Oberschwingungen aus dem harmonischen Verlustfaktor und aus für ein vorbestimmtes Modulationsverfahren, einen vorbestimmten Ansteuergrad und mehreren Pulsfrequenzen vorgegebene Amplituden der Oberschwingungen,
    - Ermitteln eines Schaltverlustfaktors des Umrichters in Abhängigkeit von der Pulsfrequenz,
    - Ermitteln von Schaltverlusten aus dem Schaltverlustfaktor, aus Schaltwinkeln des Umrichters und aus einem Motorstrom,
    - Bestimmen der Betriebspulsfrequenz bei einem Minimum (MM) der Modulationsverluste (3), die die Summe der Oberschwingungsverluste (1) und der Schaltverluste (2) darstellen, über der Pulsfrequenz.

2. Verfahren nach Anspruch 1, wobei das Ermitteln des harmonischen Verlustfaktors (1) und das Ermitteln des Schaltverlustfaktors (2) durch Messungen erfolgen, bei denen der Umrichter (UR) zur Anregung dient.

3. Verfahren nach Anspruch 1 oder 2, wobei aus dem harmonischen Verlustfaktor (1) in Abhängigkeit von der Frequenz und von einer Amplitude einer Spannungsgrundschwingung unter Berücksichtigung eines vorgegebenen Optimierungskriteriums mehrere Pulsmuster (PM) zum Betreiben des Umrichter-Motor-Systems ermittelt werden.

4. Verfahren nach Anspruch 3, wobei zum Betreiben des Umrichter-Motor-Systems durch den Umrichter (UR) automatisch dasjenige der mehreren Pulsmuster (PM) ausgewählt wird, das der bestimmten Betriebspulsfrequenz und einer vorgebbaren Amplitude der Spannungsgrundschwingung zugeordnet ist.

5. Verfahren nach Anspruch 3 oder 4, wobei jedes der mehreren Pulsmuster (PM) eine halbperiodische oder viertelperiodische Symmetrie besitzt.

6. Verfahren nach einem der vorhergehenden Ansprüche, wobei das Ermitteln des harmonischen Verlustfaktors (1) und das Ermitteln des Schaltverlustfaktors (2) im Leerlauf des Motors (M) stattfinden.

7. Verfahren nach einem der Ansprüche 3 bis 6, wobei das Ermitteln des Schaltverlustfaktors (2) durch Berechnen aus Schaltwinkeln eines der Pulsmuster (PM) und gegebenenfalls des $\cos\varphi$ erfolgt.

8. Verfahren zum Betreiben eines Umrichter-Motor-Systems, das einen Umrichter (UR) und einen damit angesteuerten Motor (M) aufweist, durch

    - Ermitteln einer Betriebsfrequenz des Umrichter-Motor-Systems nach einem der vorhergehenden Ansprüche,
    - Anpassen der Betriebspulsfrequenz in Abhängigkeit von einem Drehmoment oder von einer Drehzahl des Motors (M) derart, dass ein Systemverlust des Umrichter-Motor-Systems reduziert wird, und
    - Betreiben des Umrichter-Motor-Systems mit der angepassten Betriebspulsfrequenz.

9. Umrichter-Motor-System mit

- einem Umrichter (UR) und
- einem von dem Umrichter (UR) angesteuerten Motor (M), **gekennzeichnet durch**
- eine Steuervorrichtung (SV) zum Steuern des Umrichters (UR), die ausgebildet ist zum
- Ermitteln eines harmonischen Verlustfaktors des Motors in Abhängigkeit von einer Frequenz,
- Ermitteln von Oberschwingungsverlusten aufgrund von Oberschwingungen aus dem harmonischen Verlustfaktor und aus für ein vorbestimmtes Modulationsverfahren, einen vorbestimmten Ansteuergrad und mehreren Pulsfrequenzen vorgegebene Amplituden der Oberschwingungen,
- Ermitteln eines Schaltverlustfaktors des Umrichters in Abhängigkeit von der Pulsfrequenz,
- Ermitteln von Schaltverlusten aus dem Schaltverlustfaktor, aus Schaltwinkeln des Umrichters und aus einem Motorstrom,
- Bestimmen der Betriebspulsfrequenz bei einem Minimum (MM) der Modulationsverluste (3), die die Summe der Oberschwingungsverluste (1) und der Schaltverluste (2) darstellen, über der Pulsfrequenz und
- Steuern des Umrichters (UR) mit der bestimmten Betriebspulsfrequenz.

10. Umrichter-Motor-System nach Anspruch 9 mit den Schritten:

- Bestimmen von Aussteuergradgrenzen sowie Ausgangsfrequenzgrenzen für das Umschalten zwischen verschiedenen Modulationsverfahren,
- Bestimmen einer U-f-Tabelle für die Steuerung des Umrichters aus den Ansteuergradgrenzen und den Ausgangsfrequenzgrenzen und
- Steuern des Umrichters (UR) mit der bestimmten U-f-Tabelle anstelle der bestimmten Betriebspulsfrequenz.

11. Umrichter-Motor-System nach Anspruch 10, wobei die Steuervorrichtung (SV) dafür ausgelegt ist, den Umrichter (UR) zu dem Ermitteln des harmonischen Verlustfaktors (1) zu nutzen, indem der Umrichter (UR) den Motor dafür anregt.

## FIG 1

## FIG 2

# FIG 3

Europäisches
Patentamt

European
Patent Office

Office européen
des brevets

**EUROPÄISCHER RECHERCHENBERICHT**

Nummer der Anmeldung

EP 16 18 6566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2016/056737 A1 (WHITE ADAM MICHAEL [US]) 25. Februar 2016 (2016-02-25) * Absatz [0011] - Absatz [0014]; Abbildungen 1,2 * ----- | 1-11 | INV. H02P29/50 H02M1/00 |
| A | US 2010/185350 A1 (OKAMURA MASAKI [JP] ET AL) 22. Juli 2010 (2010-07-22) * Absatz [0060] - Absatz [0064]; Abbildung 4 * ----- | 1-11 | |

RECHERCHIERTE SACHGEBIETE (IPC)

H02P
H02M

Der vorliegende Recherchenbericht wurde für alle Patentansprüche erstellt

| Recherchenort | Abschlußdatum der Recherche | Prüfer |
|---|---|---|
| München | 23. Februar 2017 | Schürle, Patrick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 18 6566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-02-2017

| Im Recherchenbericht angeführtes Patentdokument | Datum der Veröffentlichung | Mitglied(er) der Patentfamilie | Datum der Veröffentlichung |
|---|---|---|---|
| US 2016056737 A1 | 25-02-2016 | EP 2988415 A2<br>US 2016056737 A1 | 24-02-2016<br>25-02-2016 |
| US 2010185350 A1 | 22-07-2010 | CN 101622780 A<br>EP 2114005 A1<br>JP 4424421 B2<br>JP 2009171768 A<br>US 2010185350 A1<br>WO 2009090835 A1 | 06-01-2010<br>04-11-2009<br>03-03-2010<br>30-07-2009<br>22-07-2010<br>23-07-2009 |

EPO FORM P0461

Für nähere Einzelheiten zu diesem Anhang : siehe Amtsblatt des Europäischen Patentamts, Nr.12/82